# EUROPEAN PATENT APPLICATION

(11) **EP 4 142 320 A1**
(43) Date of publication of application: **01.03.2023**
(21) Application number: 22191370.0
(22) Date of filing: 22.08.2022
(51) Int. Cl.: H04W 8/20, H04W 88/04, H04W 84/18, H04W 4/46, H04W 76/14, H04W 8/00, H04L 67/51, H04W 84/12

(54) **METHODS FOR EXTENDING SERVICE RANGE OF NEIGHBOR AWARENESS NETWORKING (NAN) COMMUNICATION**

(30) Priority: 24.08.2021 US 202163236274 P; 21.07.2022 US 202217814033
(71) Applicant: MediaTek Inc., Hsinchu City 30078 (TW)
(72) Inventor: SU, Wei-Hung, 30078 Hsinchu City (TW); WANG, Bang-Chyuan, 30078 Hsinchu City (TW); HUANG, Shun-Yong, 30078 Hsinchu City (TW)
(74) Representative: Hoefer & Partner Patentanwälte mbB

(57) **Abstract**

A method for a service-providing NAN device to extend the service range of NAN communication is provided. The service-providing NAN device advertises a publication of a service (S710). The service-providing NAN device receives a subscription to the service from an end-user NAN device (S720). The service-providing NAN device establishes a data path from the service-providing NAN device to the end-user NAN device through one or more intermediate NAN devices (S730). The service-providing NAN device transfers data of the service from the service-providing NAN device to the end-user NAN device over the data path (S740).

## Description

### CROSS REFERENCE TO RELATED APPLICATIONS

This application claims priority under 35 U.S.C. §119 from U.S. Provisional Application Number 63/236,274, entitled "Extended NAN service range with data traffic control", filed on August 24, 2021, the subject matter of which is incorporated herein by reference.

### BACKGROUND OF THE APPLICATION

### Field of the Application

The application generally relates to mobile communications, and more particularly, to apparatuses and methods for extending the service range of Neighbor Awareness Networking (NAN) communication.

### Description of the Related Art

With the growing demand for ubiquitous computing and networking, various wireless technologies have been developed, including Wireless-Fidelity (Wi-Fi) which is a Wireless Local Area Network (WLAN) technology allowing mobile stations, such as a smartphone, a smart pad, a laptop computer, a portable multimedia player, an embedded apparatus, or the like, to obtain wireless services in a frequency band of 2.4 GHz, 5 GHz, and/or 60 GHz. In a typical scenario of Wi-Fi communication, a Wi-Fi station may obtain wireless services from an Access Point (AP), which acts as a wireless router for providing the wireless services, and communication between two Wi-Fi stations is possible only with an intermediate AP.

To address this shortcoming, the Wi-Fi Alliance (WFA) has been conducting research to support direct communication between two Wi-Fi stations without the need for an intermediate AP or any fixed network infrastructure, and as a result, Neighbor Awareness Networking (NAN) technology, such as Wi-Fi Aware^{™} has been developed. An NAN protocol allows bidirectional sharing of information directly between nearby or proximate NAN devices. That is, the NAN protocol is a proximity-based protocol that only supports communication within a short range. However, there may be situations where communication between two specific NAN devices is temporarily or urgently required in an open space without any networking infrastructure but the distance between these two NAN devices is beyond the service range of direct NAN communication.

### BRIEF SUMMARY OF THE APPLICATION

In order to solve the aforementioned problem, the present application proposes to extend the service range of NAN communication, by allowing intermediate NAN device(s) to relay service publication/subscription and service data between two specific NAN devices which desire to communicate with each other but are not located within the service range of direct NAN communication. Moreover, the present application further allows the service-providing NAN device to facilitate bandwidth control and sleep control over the intermediate NAN device(s) and the end-user NAN device, by sending the schedule of allocated radio resources to the intermediate NAN device(s) and the end-user NAN device in a Discovery Window (DW) of the NAN cluster in which the service-providing NAN device, the intermediate NAN device, and the end-user NAN device cooperate to synchronize to a common DW schedule. Methods according to the invention are defined in the independent claims.

In a first aspect of the application, a method is provided as follows. A first NAN device (e.g., the service-providing NAN device) advertises a publication of a service. The first NAN device receives a subscription to the service from a second NAN device. The first NAN device establishes a data path from the first NAN device to the second NAN device through one or more intermediate NAN devices. The first NAN device transfers data of the service from the first NAN device to the second NAN device over the data path.

In one example of the first aspect of the application, the first NAN device determines a schedule of radio resources for the intermediate NAN devices to relay the data of the service to the second NAN device, and transmits the schedule of the radio resources to the intermediate NAN devices and the second NAN device. The schedule of the radio resources may be transmitted in a DW, and the radio resources may be located between the DW and the next DW. The schedule of the radio resources may be determined based on number of the intermediate NAN devices.

In one example of the first aspect of the application, the data path is established based on NAN ranging or location information of the intermediate NAN devices.

In one example of the first aspect of the application, the first NAN device updates the data path in response to movement of the second NAN device or any of the intermediate NAN devices.

In one example of the first aspect of the application, the first NAN device terminates the data path in response to the second NAN device unsubscribing from the service or leaving a cluster to which the first NAN device and the intermediate NAN devices belong, and stops the service in response to terminating the data path.

In one example of the first aspect of the application, the advertising of the publication of the service is performed in response to the first NAN device detecting an event. The event may be a traffic jam or a traffic incident. The first NAN device may comprise a camera providing the service of monitoring the traffic jam or the traffic incident.

In a second aspect of the application, a method is provided as follows. An intermediate NAN device relays a publication of the service provided by a first NAN device to a second NAN device. The intermediate NAN device relays a subscription to the service from the second NAN device to the first NAN device. The intermediate NAN device establishes a data path between the first NAN device and the second NAN device. The intermediate NAN device relays data of the service from the first NAN device to the second NAN device over the data path.

In one example of the second aspect of the application, the intermediate NAN device receives, from the first NAN device, a schedule of radio resources for the intermediate NAN devices to relay the data of the service to the second NAN device. The schedule of the radio resources may be received in a DW, and the radio resources may be located between the DW and the next DW. The intermediate NAN device may enter a sleep mode in times where the radio resources are not located, and stop NAN communication in response to entering the sleep mode.

In one example of the second aspect of the application, the intermediate NAN device terminates the data path in response to the second NAN device unsubscribing from the service or leaving a cluster to which the first NAN device and the intermediate NAN device belong.

In a third aspect of the application, a method is provided as follows. A second NAN device (e.g., the end-user NAN device) receives a publication of a service provided by a first NAN device. The second NAN device transmits a subscription to the service to the first NAN device. The second NAN device establishes a data path from the first NAN device to the second NAN device through one or more intermediate NAN devices. The second NAN device receives data of the service from the first NAN device over the data path.

In one example of the third aspect of the application, the second NAN device receives, from the first NAN device, a schedule of radio resources for the intermediate NAN devices to relay the data of the service to the second NAN device. The schedule of the radio resources may be received in a DW, and the radio resources may be located between the DW and the next DW. The second NAN device may enter a sleep mode in times where the radio resources are not located, and stop NAN communication in response to entering the sleep mode.

In one example of the third aspect of the application, the second NAN device terminates the data path in response to the second NAN device unsubscribing from the service or leaving a cluster to which the first NAN device and the intermediate NAN devices belong.

Other aspects and features of the present application will become apparent to those with ordinary skill in the art upon review of the following descriptions of specific embodiments of the apparatuses and methods for extending the service range of NAN communication.

### BRIEF DESCRIPTION OF DRAWINGS

The application can be more fully understood by reading the subsequent detailed description and examples with references made to the accompanying drawings, wherein:
Fig. 1 is a block diagram of an NAN cluster according to an embodiment of the application;
Fig. 2 is a schematic diagram illustrating an exemplary scenario of an NAN cluster according to an embodiment of the application;
Fig. 3 is a conceptual view of an NAN protocol architecture of communication between two NAN devices;
Fig. 4 is a block diagram illustrating an NAN device according to an embodiment of the application;
Fig. 5 is a message sequence chart illustrating extension of the service range of NAN communication according to an embodiment of the application;
Figs. 6A~6C are schematic diagrams illustrating the scheduled radio resources for NAN devices to participate in an extended NAN communication according to an embodiment of the application;
Fig. 7 is a flow chart illustrating the method for a service-providing NAN device to extend the service range of NAN communication according to an embodiment of the application;
Fig. 8 is a flow chart illustrating the method for an intermediate NAN device to extend the service range of NAN communication according to another embodiment of the application; and
Fig. 9 is a flow chart illustrating the method for an end-user NAN device to extend the service range of NAN communication according to another embodiment of the application.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

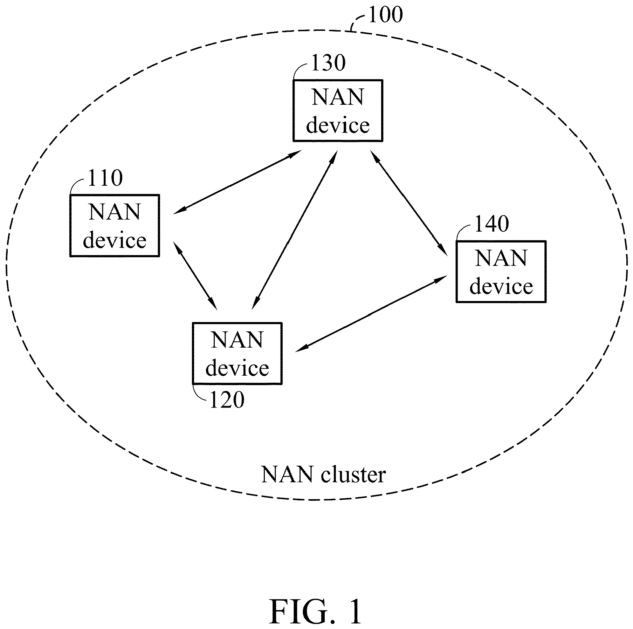

Fig. 1 is a block diagram of an NAN cluster according to an embodiment of the application.

As shown in Fig. 1, the NAN cluster 100 may consist of a plurality of NAN devices 110-140 synchronized to the same DW schedule, wherein each of the NAN devices 110-140 is a Wi-Fi capable device supporting all required NAN protocol mechanisms. Specifically, the NAN devices 110-140 may use the same set of NAN parameters, including information of interval between two successive DWs, and information of beacon interval, and information of the NAN channel in use, etc. The NAN channel may be pre-defined, such as channel 6 (2.437 GHz) in the 2.4 GHz band, channel 44 (5.220 GHz) in the 5 GHz lower band (5.150~5.250 GHz), channel 149 (5.745 GHz) in the 5 GHz upper band (5.725~5.825 GHz), and channel 149 if both 5 GHz upper band and lower band are allowed.

Within a NAN cluster, each NAN device can operate under different roles, such as master or non-master, which entail different responsibilities. To clarify further, each of the NAN devices 110-140 may directly transmit a NAN service discovery frame in a multicast/unicast manner to another NAN device in a DW. At least one of the NAN devices 110~140 may be the NAN master of the NAN cluster 100, and the NAN master may be changed dynamically. In addition, the NAN master may transmit a NAN synchronization (or sync) beacon frame, a NAN discovery beacon frame, and/or a NAN service discovery frame.

The NAN sync beacon frame may be used for synchronization of the NAN devices 110∼140 in the NAN cluster 100. The NAN discovery beacon frame may be used for the purpose of advertising to NAN devices that are not registered to the NAN cluster 100, so that the NAN cluster 100 can be discovered. The NAN service discovery frame may be used for the purpose of exchanging information of a service between two NAN devices by advertising the service between the NAN devices in the NAN cluster 100.

Within the NAN cluster 100, any two of the NAN devices 110-140 that are located within the service range of direct NAN communication may have a common network connection by virtue of a direct wireless link formed between two NAN devices, so that any two NAN devices may communicate without using an intermediary device (e.g., an AP or a base station). In one example, the direct wireless link may be formed using an NAN technology, such as Wi-Fi Aware^{™}. However, there may be situations where some of the NAN devices 110-140 may move out of the service range of direct NAN communication with some other NAN devices in the NAN cluster 100.

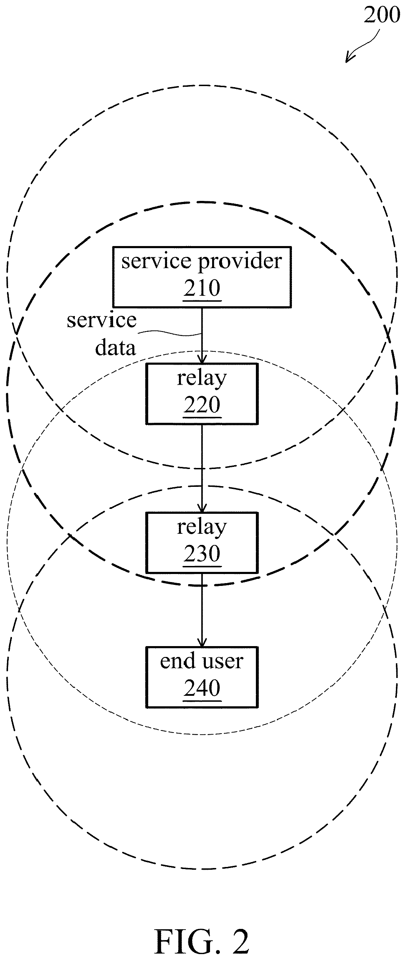

In accordance with one novel aspect, if two of the NAN devices 110-140 are located beyond the service range of direct NAN communication, the other NAN devices may serve as relays to forward signaling (e.g., service publication/subscription) and/or service data between the two NAN devices, thereby extending the service range of NAN communication. For example, the NAN device 110 may be configured as a service provider which provides a traffic monitoring service, and the NAN devices 120~130 may be configured as relays to allow the NAN device 140, which may be located beyond the service range of direct NAN communication with the NAN device 110, to be able to subscribe to the traffic monitoring service of the NAN device 110. Fig. 2 is a schematic diagram illustrating an exemplary scenario of an NAN cluster according to an embodiment of the application. As shown in Fig. 2, the NAN cluster 200 includes a plurality of NAN devices 210~240 (e.g., vehicles) forming a platoon on a highway or in a tunnel, wherein the NAN device 210 may be configured as a service provider to monitor the traffic ahead for detecting events, such as traffic jam or traffic incident. Note that due to the limited service range of direct NAN communication (denoted as dotted circles in Fig. 2), each of the NAN devices 210~240 can only directly communicate with the prior or latter NAN device in the platoon. Nevertheless, the intermediate NAN devices (also called proxy/tunnel NAN devices) 220~230 may be configured as relays to forward service publication/subscription and service data (e.g., image/video data of the monitored traffic) between the NAN devices 210 and 240.

In accordance with another novel aspect, if any of the NAN devices 110-140 is configured as a service provider, it can facilitate bandwidth control and sleep control over the other NAN devices, by sending the schedule of allocated radio resources to the other NAN devices in a DW. For each NAN device receiving this schedule of allocated radio resources, it may wake up at the time where the allocated radio resources are located to perform the relay function or service subscription/reception function, and enter the sleep mode at the time where the allocated radio resources are not located. By entering the sleep mode, it simply means that an NAN device stops NAN communication.

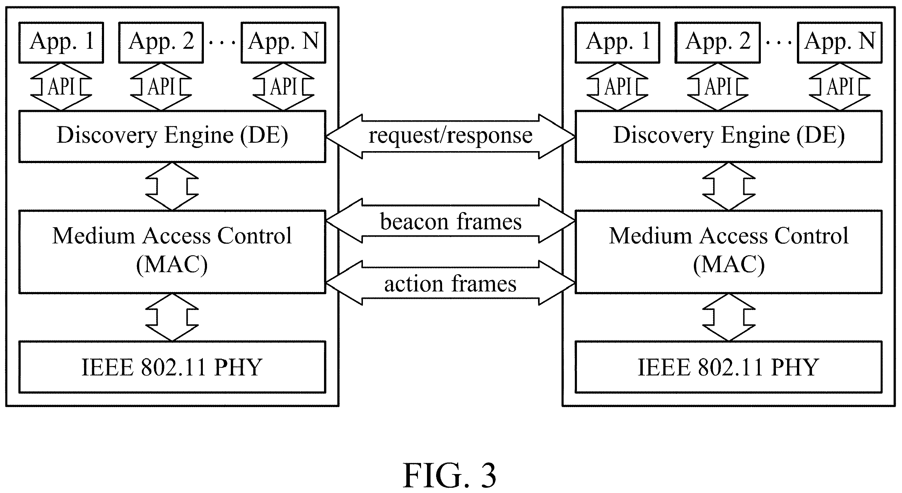

Fig. 3 is a conceptual view of an NAN protocol architecture of communication between two NAN devices.

As shown in Fig. 3, the NAN protocol stack is based on the Institute of Electrical and Electronics Engineers (IEEE) 802.11 physical layer, and includes an NAN Discovery Engine (DE), an NAN Medium Access Control (MAC) layer, and NAN Application Programming Interfaces (APIs) towards respective applications (App. 1, App. 2, .., App. N) as primary components. The NAN DE provides basic Publish/Subscribe function to upper-layer services or applications. The NAN MAC layer is responsible for the maintenance of NAN clusters (e.g., creating, joining, and/or merging clusters), for preserving synchronization in the NAN cluster, and for providing transmission and reception services to the DE. Specifically, service requests and responses are passed between two NAN devices through the NAN DE, and the NAN MAC layer processes NAN beacon frames and NAN service discovery frames.

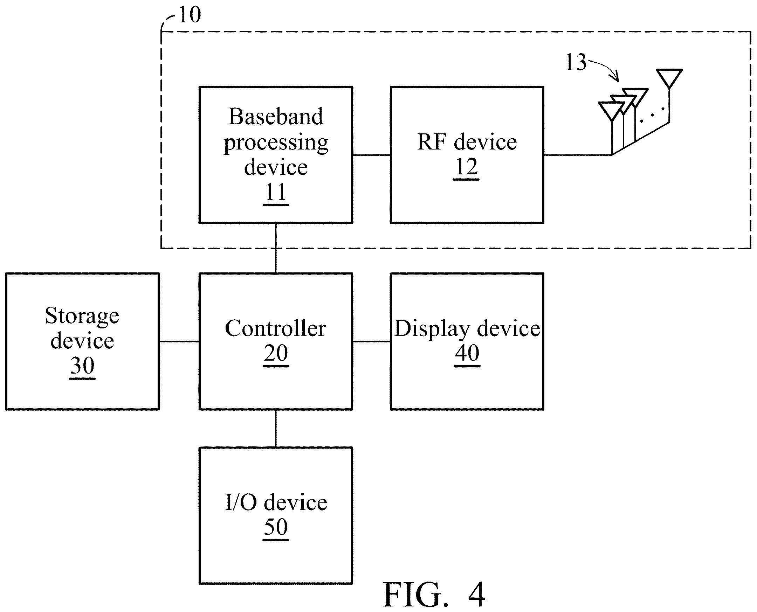

Fig. 4 is a block diagram illustrating an NAN device according to an embodiment of the application.

As shown in Fig. 4, an NAN device (e.g., the NAN device 110/120/130/140) may include a wireless transceiver 10, a controller 20, a storage device 30, a display device 40, and an Input/Output (I/O) device 50.

The wireless transceiver 10 is configured to perform wireless transmission and reception to and from one or more NAN devices.

Specifically, the wireless transceiver 10 may include a baseband processing device 11, a Radio Frequency (RF) device 12, and antenna 13, wherein the antenna 13 may include an antenna array.

The baseband processing device 11 is configured to perform baseband signal processing. The baseband processing device 11 may contain multiple hardware components to perform the baseband signal processing, including Analog-to-Digital Conversion (ADC)/Digital-to-Analog Conversion (DAC), gain adjusting, modulation/demodulation, encoding/decoding, and so on.

The RF device 12 may receive RF wireless signals via the antenna 13, convert the received RF wireless signals to baseband signals, which are processed by the baseband processing device 11, or receive baseband signals from the baseband processing device 11 and convert the received baseband signals to RF wireless signals, which are later transmitted via the antenna 13. The RF device 12 may also contain multiple hardware devices to perform radio frequency conversion. For example, the RF device 12 may comprise a mixer to multiply the baseband signals with a carrier oscillated in the radio frequency of the supported NAN technology, wherein the radio frequency may be 2.4 GHz or 5GHz utilized in Wi-Fi Aware^{™}, or another radio frequency, depending on the NAN technology in use.

The controller 20 may be a general-purpose processor, a Micro Control Unit (MCU), an application processor, a Digital Signal Processor (DSP), a Graphics Processing Unit (GPU), a Holographic Processing Unit (HPU), a Neural Processing Unit (NPU), or the like, which includes various circuits for providing the functions of data processing and computing, controlling the wireless transceiver 10 for NAN communication with another NAN device, storing and retrieving data (e.g., program code) to and from the storage device 30, sending a series of frame data (e.g. representing text messages, graphics, images, etc.) to the display device 40, and receiving user inputs or outputting signals via the I/O device 50.

In particular, the controller 20 coordinates the aforementioned operations of the wireless transceiver 10, the storage device 30, the display device 40, and the I/O device 50 for performing the method of the present application.

In another embodiment, the controller 20 may be incorporated into the baseband processing device 11, to serve as a baseband processor.

As will be appreciated by persons skilled in the art, the circuits of the controller 20 will typically include transistors that are configured in such a way as to control the operation of the circuits in accordance with the functions and operations described herein. As will be further appreciated, the specific structure or interconnections of the transistors will typically be determined by a compiler, such as a Register Transfer Language (RTL) compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage device 30 may be a non-transitory machine-readable storage medium, including a memory, such as a FLASH memory or a Non-Volatile Random Access Memory (NVRAM), or a magnetic storage device, such as a hard disk or a magnetic tape, or an optical disc, or any combination thereof for storing data, instructions, and/or program code of applications, communication protocols, and/or the method of the present application. For example, the method of the present application may be implemented as part of the communication protocol, such as an NAN protocol including an NAN DE, an NAN MAC layer, and an IEEE 802.11 PHY layer.

The display device 40 may be a Liquid-Crystal Display (LCD), a Light-Emitting Diode (LED) display, an Organic LED (OLED) display, or an Electronic Paper Display (EPD), etc., for providing a display function. Alternatively, the display device 40 may further include one or more touch sensors disposed thereon or thereunder for sensing touches, contacts, or approximations of objects, such as fingers or styluses.

The I/O device 50 may include one or more buttons, a keyboard, a mouse, a touch pad, a video camera, a microphone, and/or a speaker, etc., to serve as the Man-Machine Interface (MMI) for interaction with users.

It should be understood that the components described in the embodiment of Fig. 4 are for illustrative purposes only and are not intended to limit the scope of the application. For example, an NAN device may include more components, such as a power supply, and/or an additional wireless transceiver, wherein the power supply may be a mobile/replaceable battery providing power to all the other components of the NAN device, and the additional wireless transceiver may provide the function of wireless transceiving using a non-NAN technology, such as the Wideband Code Division Multiple Access (WCDMA) technology, the Long Term Evolution (LTE) technology, or the 5G New Radio (NR) technology. Alternatively, an NAN device may include fewer components. For example, an NAN device may not have a display device 40 or an I/O device 50.

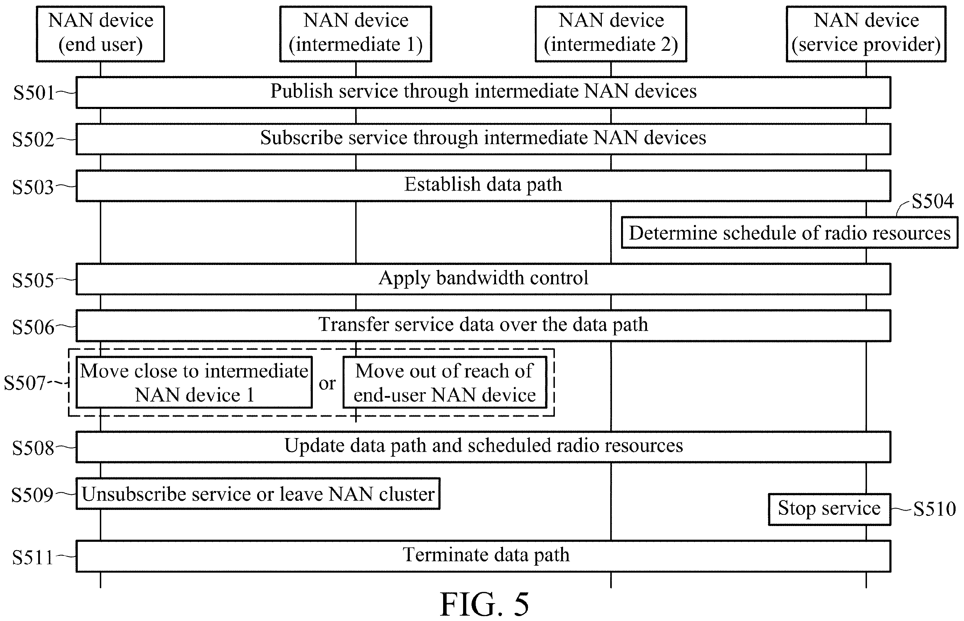

Fig. 5 is a message sequence chart illustrating extension of the service range of NAN communication according to an embodiment of the application.

In step S501, the service-providing NAN device (e.g., the NAN device 110) advertises (e.g., via multicast/broadcast) the publication of a service to the other NAN devices (e.g., the NAN devices 120~140). Specifically, the service publication is relayed by the intermediate NAN devices (e.g., the NAN devices 120~130) to the end-user NAN device (e.g., the NAN device 140). In one example, the publication of the service may be advertised via a Publish Service Discovery Frame (SDF).

In step S502, the end-user NAN device transmits a subscription to the service to the service-providing NAN device through the intermediate NAN devices. In one example, the subscription to the service may be transmitted via a Subscribe SDF.

In step S503, the service-providing NAN device establishing a data path to the end-user NAN device through the intermediate NAN devices.

Specifically, the establishment of the data path may include establishing a first data link between the service-providing NAN device and the intermediate NAN device 1, and a second data link between the intermediate NAN devices, and a third data link between the intermediate NAN device 2 and the end-user NAN device, wherein the first, second, and third data links constitute the data path from the service-providing NAN device to the end-user NAN device.

In one example, the establishment of each data link or data path may be carried out via the signaling (e.g., a Data Path Request NAN Action Frame (NAF), and a Data Path Response NAF) between two NAN devices. In another example, the establishment of each data link or data path may be carried out via the signaling (e.g., a Data Path Request NAF, a Data Path Response NAF, a Data Path Confirm NAF, and a Data Path Security Install NAF) between two NAN devices, if security of communication needs to be activated.

In step S504, the service-providing NAN device determines the schedule of radio resources for the other NAN devices to use for realizing NAN communication between the service-providing NAN device and the end-user NAN device. That is, the scheduled radio resources include the radio resources for the intermediate NAN devices to relay the service data to the end-user NAN device.

In step S505, the service-providing NAN device applies bandwidth control over the other NAN devices, by transmitting (e.g., via multicast/broadcast) the schedule of radio resources to the other NAN devices in a DW. Specifically, the schedule may include the time information (e.g., time duration) and frequency information (e.g., the used channel) of the scheduled radio resources for each NAN device.

In step S506, the service-providing NAN device starts transferring data of the service to the end-user NAN device over the data path.

In step S507, the end-user NAN device moves to a location close to the intermediate NAN device 1 or the intermediate NAN device 2 moves to a location out of the service range of direct communication with the end-user NAN device (e.g., the intermediate NAN device 2 moves away from the platoon formed by the NAN cluster).

In step S508, the service-providing NAN device updates the data path and the schedule of radio resources for the other NAN devices on the updated data path.

In step S509, the end-user NAN device unsubscribes from the service or leaves the NAN cluster.

In step S510, the service-providing NAN device stops the service.

In step S511, the service-providing NAN device terminates the data path.

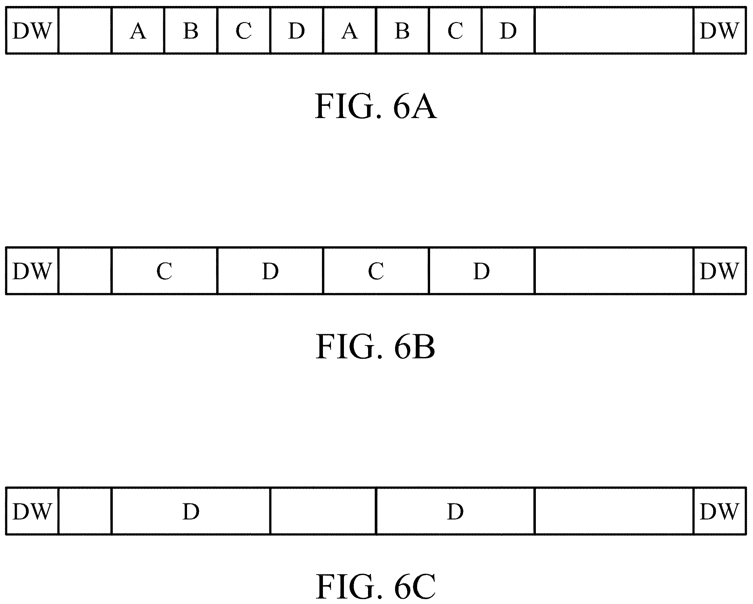

Figs. 6A~6C are schematic diagrams illustrating the scheduled radio resources for NAN devices to participate in an extended NAN communication according to an embodiment of the application.

As shown in Fig. 6A, the time-frequency resources denoted with A refers to the radio resources scheduled for NAN device 1 to perform NAN communication with NAN device 2, the time-frequency resources denoted with B refers to the radio resources scheduled for NAN device 2 to perform NAN communication with NAN device 3, the time-frequency resources denoted with C refers to the radio resources scheduled for NAN device 3 to perform NAN communication with NAN device 4, and the time-frequency resources denoted with D refers to the radio resources scheduled for NAN device 4 to perform NAN communication with NAN device 5, wherein the NAN devices 1-5 form a platoon in order by the number from 1 to 5 (similar to the example of Fig. 2).

As shown in Fig. 6B, the schedule is updated when the NAN devices 1-2 leave the NAN cluster or unsubscribe from the service, and the rescheduled radio resources C and D may be expended since there are fewer NAN devices in the NAN cluster.

As shown in Fig. 6C, the schedule is further updated when the NAN device 3 also leaves the NAN cluster or unsubscribes from the service, and the rescheduled radio resources D may be further expended since there is only one NAN device remained in the NAN cluster.

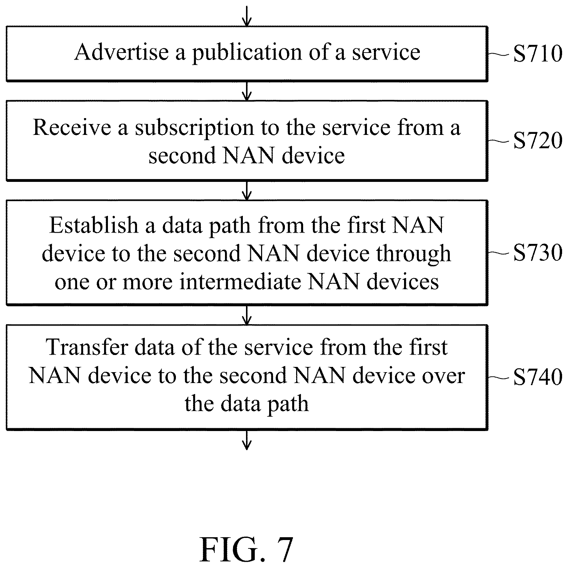

Fig. 7 is a flow chart illustrating the method for a service-providing NAN device to extend the service range of NAN communication according to an embodiment of the application.

In step S710, a first NAN device (e.g., a service-providing NAN device) advertises the publication of a service.

In step S720, the first NAN device receives a subscription to the service from a second NAN device (e.g., an end-user NAN device).

In step S730, the first NAN device establishes a data path from the first NAN device to the second NAN device through one or more intermediate NAN devices. In one example, the data path may be established based on the NAN ranging or location information of the intermediate NAN devices and the second NAN device.

In step S740, the first NAN device transfers data of the service from the first NAN device to the second NAN device over the data path.

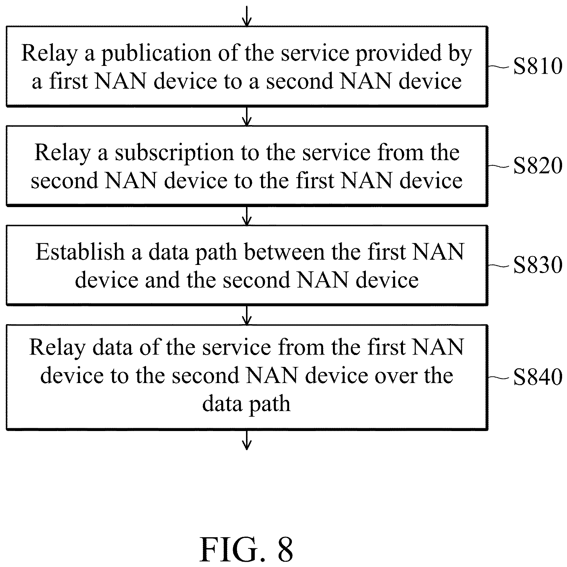

Fig. 8 is a flow chart illustrating the method for an intermediate NAN device to extend the service range of NAN communication according to another embodiment of the application.

In step S810, an intermediate NAN device relays the publication of the service provided by a first NAN device (e.g., a service-providing NAN device) to a second NAN device (e.g., an end-user NAN device).

In step S820, the intermediate NAN device relays a subscription to the service from the second NAN device to the first NAN device.

In step S830, the intermediate NAN device establishes a data path between the first NAN device and the second NAN device.

In step S840, the intermediate NAN device relays data of the service from the first NAN device to the second NAN device over the data path.

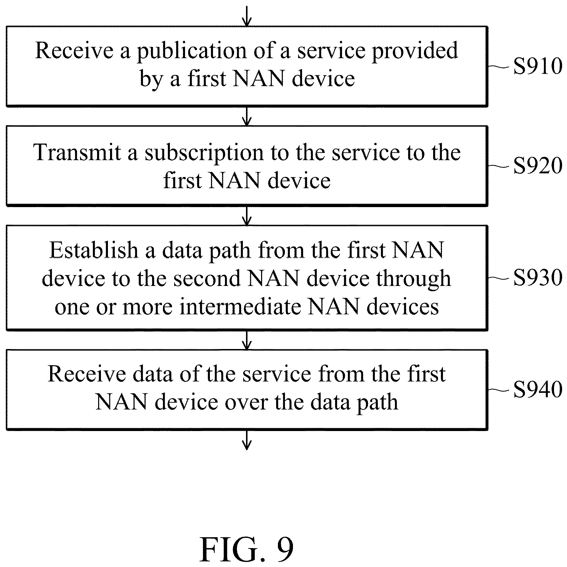

Fig. 9 is a flow chart illustrating the method for an end-user NAN device to extend the service range of NAN communication according to another embodiment of the application.

In step S910, a second NAN device (e.g., an end-user NAN device) receives the publication of a service provided by a first NAN device (e.g., a service-providing NAN device).

In step S920, the second NAN device transmits a subscription to the service to the first NAN device.

In step S930, the second NAN device establishes a data path from the first NAN device to the second NAN device through one or more intermediate NAN devices.

In step S940, the second NAN device receives data of the service from the first NAN device over the data path.

While the application has been described by way of example and in terms of preferred embodiment, it should be understood that the application is not limited thereto. The scope of the present application shall be defined and protected by the following claims.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

## Claims

1. A method, comprising:
advertising (S710) a publication of a service by a first Neighbor Awareness Networking, NAN, device;
receiving (S720) a subscription to the service from a second NAN device;
establishing (S730) a data path from the first NAN device to the second NAN device through one or more intermediate NAN devices; and
transferring (S740) data of the service from the first NAN device to the second NAN device over the data path.

2. The method as claimed in claim 1, further comprising:
determining a schedule of radio resources for the intermediate NAN devices to relay the data of the service to the second NAN device; and
transmitting the schedule of the radio resources to the intermediate NAN devices and the second NAN device.

3. The method as claimed in claim 2, wherein the schedule of the radio resources is transmitted in a Discovery Window, DW, and the radio resources are located between the DW and the next DW; and
wherein the schedule of the radio resources is determined based on number of the intermediate NAN devices.

4. The method as claimed in any one of the preceding claims, wherein the data path is established based on NAN ranging or location information of the intermediate NAN devices.

5. The method as claimed in any one of the preceding claims, further comprising:
updating the data path in response to movement of the second NAN device or any of the intermediate NAN devices.

6. The method as claimed in any one of the preceding claims, further comprising:
stopping the service and terminating the data path in response to the second NAN device unsubscribing from the service or leaving a cluster to which the first NAN device and the intermediate NAN devices belong.

7. The method as claimed in any one of the preceding claims, wherein the advertising of the publication of the service is performed in response to the first NAN device detecting an event.

8. A method, comprising:
relaying (S810) a publication of a service provided by a first NAN device to a second NAN device via an intermediate NAN device;
relaying (S820) a subscription to the service from the second NAN device to the first NAN device via the intermediate NAN device;
establishing (S830) a data path between the first NAN device and the second NAN device via the intermediate NAN device; and
relaying (S840) data of the service from the first NAN device to the second NAN device via the intermediate NAN device over the data path.

9. The method as claimed in claim 8, further comprising:
receiving, from the first NAN device, a schedule of radio resources for the intermediate NAN devices to relay the data of the service to the second NAN device;
wherein the schedule of the radio resources is received in a DW, and the radio resources are located between the DW and the next DW.

10. The method as claimed in any one of claims 8 and 9, further comprising:
entering a sleep mode at the intermediate NAN device in times where the radio resources are not located; and
stopping NAN communication in response to entering the sleep mode.

11. The method as claimed in any one of claims 8 to 10, further comprising:
terminating the data path in response to the second NAN device unsubscribing from the service or leaving a cluster to which the first NAN device and the intermediate NAN device belong.

12. A method, comprising:
receiving (S910) a publication of a service provided by a first NAN device to a second NAN device;
transmitting (S920) a subscription to the service to the first NAN device from the second NAN device;
establishing (S930) a data path from the first NAN device to the second NAN device through one or more intermediate NAN devices; and
receiving (S940), at the second NAN device, data of the service from the first NAN device over the data path.

13. The method as claimed in claim 12, further comprising:
receiving, from the first NAN device, a schedule of radio resources for the intermediate NAN devices to relay the data of the service to the second NAN device;
wherein the schedule of the radio resources is received in a DW, and the radio resources are located between the DW and the next DW.

14. The method as claimed in any one of claims 12 and 13, further comprising:
entering a sleep mode at the second NAN device in times where the radio resources are not located; and
stopping NAN communication in response to entering the sleep mode.

15. The method as claimed in any one of claims 12 to 14, further comprising:
terminating the data path in response to the second NAN device unsubscribing from the service or leaving a cluster to which the first NAN device and the intermediate NAN devices belong.
